# EUROPEAN PATENT SPECIFICATION

(11) **EP 4 075 555 B1**
(45) Date of publication and mention of the grant of the patent: **06.05.2026**
(21) Application number: 22161424.1
(22) Date of filing: 10.03.2022
(51) Int. Cl.: H01M 10/04, H01M 10/613, H01M 10/647, H01M 10/654, H01M 50/46, H01M 50/477, H01M 50/474, H01M 50/486

(54) **ELECTRODE ASSEMBLY AND ITS BATTERY DEVICE THEREOF**
ELEKTRODENANORDNUNG UND BATTERIEVORRICHTUNG DAFÜR
ENSEMBLE ÉLECTRODE ET SON DISPOSITIF DE BATTERIE CORRESPONDANT

(30) Priority: 18.03.2021 TW 110109696; 10.01.2022 TW 111100917
(43) Date of publication of application: 19.10.2022
(73) Proprietor: Prologium Technology Co., Ltd., Taoyuan City (TW); Prologium Holding Inc., Grand Cayman KY1-1104 (KY)
(72) Inventor: YANG, Szu-Nan, Taoyuan City (TW); WU, Meng-Hung, Taoyuan City (TW); FEI, Wen-Xin, Taoyuan City (TW); CHAO, Hsing-Chih, Taoyuan City (TW)
(74) Representative: Cabinet Chaillot

(56) References cited:
- CA-A1- 2 169 484
- JP-A- 2011 065 913
- JP-A- 2020 113 434

## Description

### BACKGROUND OF THE INVENTION

### CROSS REFERENCES TO RELATED APPLICATIONS

The present application claims priority to Taiwanese Patent Application 110109696 filed in the Taiwanese Patent Office on Mar. 18, 2021 and Taiwanese Patent Application 111100917 filed in the Taiwanese Patent Office on Jan. 10, 2022.

### Field of Invention

The present invention relates to an electrode assembly, in particular to an electrode assembly and its battery device thereof, which the electrochemical systems are folded to be stacked along with a z-axis.

### Related Art

In recent years, with the rapid development of various portable electronic products, electric vehicles, power storage stations, there is a high demand for energy storage devices with both high energy storage density and environmental protection. The ion secondary batteries are the optimal solution. Further, various secondary batteries such as lithium ion secondary batteries, magnesium ion secondary batteries, and sodium ion secondary batteries have been developed. Therefore, how to improve the energy density as much as possible in a limited space has always been the focus of the development of the entire related industry.

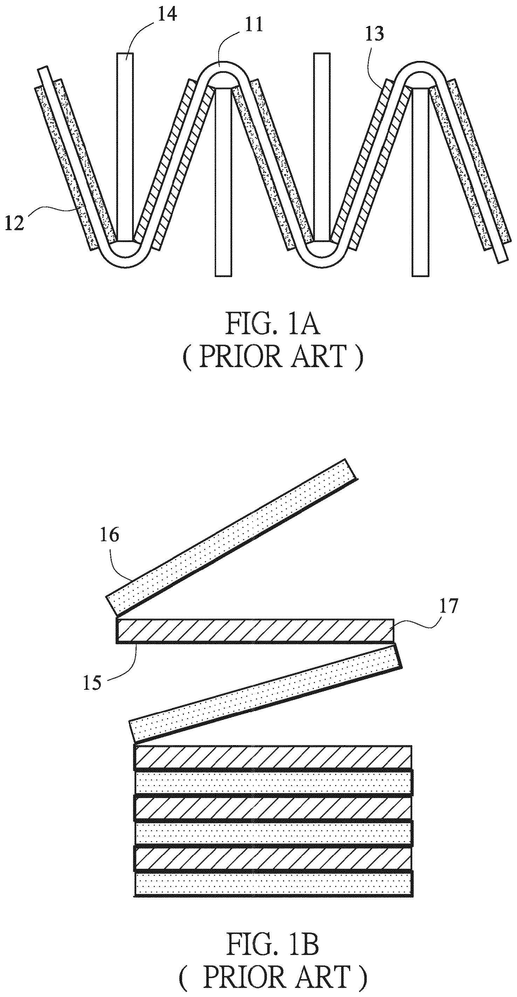

For example, please refer to FIG. 1A, as disclosed in US20140227583A1, both sides of a single current collector 11 are respectively and repeatedly coated with a cathode active material and an anode active material to form the anode patterns 12 and the cathode patterns 13. Then, non-coating portions of the current collector 11, on which the anode patterns 12 and the cathode patterns 13 are not formed, are bent into a vertical-sectional zigzag shape. The separators 14 are disposed at the interfaces of the facing anode patterns 12 and cathode patterns 13 to form the zigzag-shaped battery cell. Also, please refer to another application, US2020335813A1, of the same applicant, a positive electrode having a plurality of positive patterns formed by being pattern-coated with a positive active material at a predetermined interval and positive uncoated regions where the positive active material is not coated, and a negative electrode having a plurality of negative patterns formed by being pattern-coated with a negative active material at a predetermined interval and negative uncoated regions where the negative active material is not coated are provided. Then, a separator disposed between the positive electrode and the negative electrode. The electrode assembly is formed in a zigzag-shape by bending the positive uncoated region and the negative uncoated region. Moreover, please refer to FIG. 1B, as disclosed in TW200631218A, the flexible separator 15 is used to be bent. The anode electrode 16 and the cathode electrode 17 are only attached on the separator 15. The anode electrode 16 and the cathode electrode 17 are electrically insulated by the separator 15 to perform the vertical stacking. However, in above-mentioned applications, the positive active material and the negative active material are bent directly through the separator to form a vertical stacking. Without any buffering mechanism, due to the bending forces it is easy to cause the active materials to be broken. Further, the electrolytes are shared, it will face the problems of the limitation of the maximum permissible voltage and the non-uniform electric field distribution.

Therefore, this invention provides an electrode assembly and its battery device thereof to mitigate or obviate the aforementioned problems.

### SUMMARY OF THE INVENTION

It is a primary objective of this invention to provide an electrode assembly and its battery device thereof. The electrochemical systems of the electrode assembly are folded to be vertically stacked in a zigzag shape. The bending position includes only the belt current collector and the glue frame to prevent the active materials to be broken.

It is another objective of this invention to provide an electrode assembly and its battery device thereof. The electrochemical systems of the electrode assembly are folded to be vertically stacked in a zigzag shape and for the electrical connections. Therefore, the amount of the tabs configured to be connected in series or parallel is reduced. The production efficiency and the arrangement for power requirements are improved, and the difficulty in manufacturing processes and the energy density loss caused by space configuration are reduced.

It is also another objective of this invention to provide an electrode assembly and its battery device thereof. The electrode assembly is formed by the electrochemical systems and the glue frame to be directly sandwiched between two belt current collectors. Therefore, it is easy to mass produce and to be productized for mass production.

In order to implement the abovementioned, this invention discloses an electrode assembly, which includes a first belt current collector, a second belt current collector, a glue frame, a plurality of electrochemical systems and a plurality of bending portions. The electrochemical systems are disposed between the first belt current collector and the second belt current collector. The electrochemical systems are completely sealed by the glue frame, the first belt current collector and the second belt current collector, to make charge transfer occurring between adjacent two of the electrochemical systems without electrochemical reaction. The glue frame, which are located between any two adjacent electrochemical systems, together with the first belt current collector and the second belt current collector adhered by these portions of the glue frame are folded to form the bending portions. The electrochemical systems are vertically stacked repeatedly in a back to front orientation along with a single axis. Therefore, the disadvantages caused by shared electrolytes are eliminated via the completely sealed electrochemical systems, in which only charge transfer occurring between two adjacent of the electrochemical systems without preforming electrochemical reaction. The bending position only includes the glue frame and the belt current collector adhered by the glue frame to prevent the active materials to be broken.

Moreover, this invention discloses a battery device. A housing is utilized to package the electrode assembly. Preferably, the fire retardant or the coolant is filled between the electrode assembly and the housing to improve heat dissipation efficiency to maintain battery performance and the battery device safety is also enhanced.

### BRIEF DESCRIPTION OF THE DRAWINGS

The present invention will become more fully understood from the detailed description given hereinbelow illustration only, and thus are not limitative of the present invention, and wherein:
FIGS. 1A and 1B are schematic diagrams of a conventional art of the battery cell with a zigzag-shaped stacking.
FIG. 2A is a schematic diagram of an embodiments of the electrode assembly of this invention.
FIG. 2B is a side view diagram of an embodiments of the electrode assembly of this invention.
FIG. 2C is an exploded diagram of an embodiments of the electrode assembly before bending of this invention.
FIG. 2D is a schematic diagram of an embodiments of the electrode assembly before bending of this invention.
FIG. 2E is a schematic diagram of an embodiments of the electrode assembly with the structural reinforcing layer of this invention.
FIG. 3 is a schematic diagram of another embodiments of the electrode assembly of this invention.
FIG. 4 is a schematic diagram of another embodiments of the glue frame of the electrode assembly of this invention.
FIGS. 5A and 5E are schematic diagrams illustrating the bending process of an embodiments of the electrode assembly of this invention.
FIG. 5F is a schematic diagram of an embodiments of the electrode assembly with the heat dissipating current collector of this invention.
FIGS. 6A and 6H are schematic diagrams of an embodiments of the battery device composed of the electrode assembly packed by the aluminum plastic film of this invention.
FIGS. 7A and 7H are schematic diagrams of another embodiments of the battery device composed of the electrode assembly packed by the aluminum plastic film of this invention.
FIG. 8A is a schematic diagram of an embodiments of the battery device composed of the electrode assembly packed by the case coating with an electrically insulating layer for quasi-coin batteries of this invention.
FIG. 8B is a schematic diagram of an embodiments of the battery device composed of the electrode assembly packed by the case for quasi-coin batteries of this invention.
FIG. 8C is a schematic diagram of another embodiments of the battery device composed of the electrode assembly packed by the case for quasi-coin batteries of this invention.

### DETAILED DESCRIPTION OF THE INVENTION

The present invention will be described with respect to particular embodiments and with reference to certain drawings but the invention is not limited thereto but only by the claims. Any reference signs in the claims shall not be construed as limiting the scope. The drawings described are only schematic and are non-limiting. In the drawings, the size of some of the elements may be exaggerated and not drawn on scale for illustrative purposes.

The terminology used herein is for the purpose of describing particular embodiments only and is not intended to be limiting of the general inventive concept. As used herein, the singular forms "a", "an" and "the" are intended to include the plural forms as well, unless the context clearly indicates otherwise. Unless otherwise defined, all terms (including technical and scientific terms) used herein have the same meaning as commonly understood by one of ordinary skill in the art to which example embodiments belong. It will be further understood that terms, such as those defined in commonly used dictionaries, should be interpreted as having a meaning that is consistent with their meaning in the context of the relevant art and should not be interpreted in an idealized or overly formal sense unless expressly so defined herein.

Reference throughout this specification to "one embodiment" or "an embodiment" means that a particular feature, structure or characteristic described in connection with the embodiment is included in at least one embodiment of the present invention. Thus, appearances of the phrases

"in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

In the description of the present invention, it should be noted that the terms "installation", "connected", and "disposed" are to be understood broadly, and may be fixed or detachable, for example, can be mechanical or electrical, can be connected directly or indirectly, through an intermediate medium, which can be the internal connection between two components. The specific meanings of the above terms in the present invention can be understood in the specific circumstances by those skilled in the art.

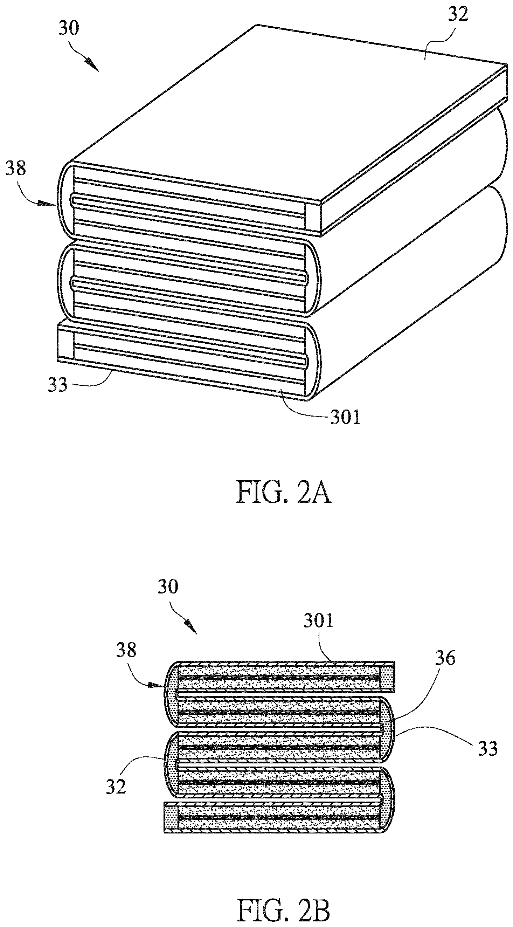

Please refer to FIGS. 2A-2D, which are the schematic diagram, the side view diagram and the exploded diagram before bending of the electrode assembly of this invention. The electrode assembly 30 includes a first belt current collector 32, a second belt current collector 33, a plurality of electrochemical systems 301, a glue frame 36, and a plurality of bending portions 38. The electrochemical systems 301 and the glue frame 36 are sandwiched between the first belt current collector 32 and the second belt current collector 33. The glue frame 36 surrounds all the sides of each electrochemical systems 301. The upper surface of the glue frame 36 is adhered to the first belt current collector 32, and the lower surface of the glue frame 36 is adhered to the second belt current collector 33. Therefore, all the electrochemical systems 301 are completely sealed by the glue frame 36, the first belt current collector 32 and the second belt current collector 33 and the electrolyte system of each electrochemical systems 301 does not circulate therebetween. Only the charge transfer occurs, through the first belt current collector 32 and the second belt current collector 33, between adjacent two of the electrochemical systems 301 without electrochemical reaction. The glue frame 36, which are located between any two adjacent electrochemical systems 301, together with the first belt current collector 32 and the second belt current collector 33 adhered by these portions of the glue frame are folded to form the bending portions 38.

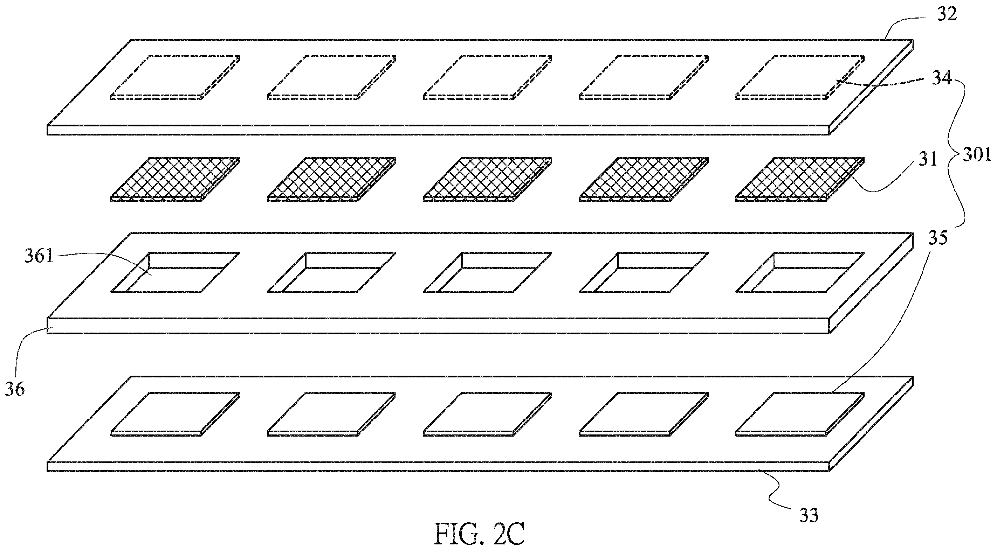

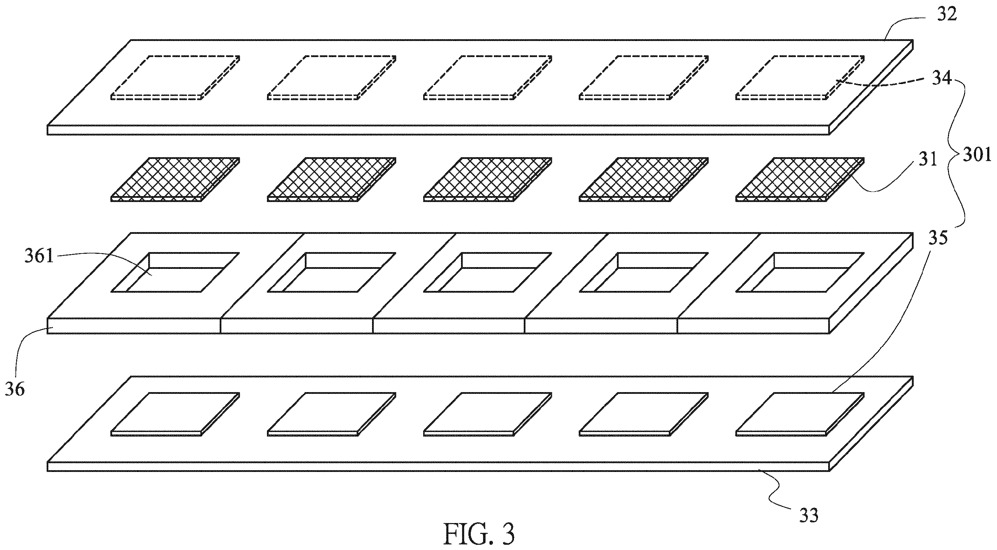

Please see FIG. 2C, the glue frame 36 includes a plurality of through openings 361. Each of the electrochemical systems 301 is accommodated in one of the through openings 361. The two surfaces of the electrochemical systems 301 are contacted with the first belt current collector 32 and the second belt current collector 33. Therefore, each of the electrochemical systems 301 is completely sealed by the glue frame 36, and the first belt current collector 32 and the second belt current collector 33. Each of electrochemical systems 301 serves as an independent module and the electrochemical systems 301 do not share any components used to compose the electrochemical system 301, such as electrolyte system. That is, only charge transfer occurring through the first belt current collector 32 and the second belt current collector 33, between adjacent two of the electrochemical systems 301 without electrochemical reaction, i.e. without ion migration and transport through the electrolyte system. As mentioned above, the glue frame 36 may be a single element with a plurality of through openings 361. Also, there may have a plurality of glue frames 36 with respective through opening 361 thereof, as refer to FIG. 3.

The materials of the first belt current collector 32 and the second belt current collector 33 are copper (Cu), Aluminum (Al), or nickel (Ni), tin (Sn), silver (Ag), gold (Au), or an alloy comprised of at least one of the foregoing metals, or polymer materials with high electrical conductivity, such as polymers mixing with electrically conductive materials. Due to the first belt current collector 32 and the second belt current collector 33 are belt-shaped, it is easy to mass produce by patterned coating.

The electrochemical system 301 includes a first active material layer 34, a second active material layer 35, a separator 31 disposed between the first active material layer 34 and the second active material layer 35 and the electrolyte system impregnated or mixed in the first active material layers 34 and the second active material layers 35. As above mentioned, any two of the electrochemical systems 301 do not share any components, such as the first active material layers 34, the second active material layers 35, the separators 31 or the electrolyte systems. An example embodiment for the manufacturing method is described below. The inner side of the first belt current collector 32 is respectively and repeatedly coated with the first active material layers 34 by a predetermined spacing. The inner side of the second belt current collector 33 is respectively and repeatedly coated with the second active material layers 35 by the same predetermined spacing. Each of the first active material layers 34 is opposed and corresponding to one of the second active material layers 35 respectively. Each of the separators 31 is sandwiched between one of the first active material layer 34 and the corresponding second active material layer 35 to form one electrochemical system 301. The separator 31 may be a porous lamination formed by polymers or the glass fibers, or the separator 31 may be a ceramic separator, which is stacked or sintered by ceramic materials, with pores to permit ion migrations. The pores are through holes or ant holes, i.e. non-straight through holes. Moreover, the separator 31 may be the porous lamination with a ceramic particles reinforcing layer, or a separator mixing with ceramic particles and ion-conductive polymers. The size of the ceramic particles are nanometer scale, micrometer scale or mixing with at least two larger different scale, such as mixing with nanometer scale and micrometer scale. The material of the ceramic particles is TiO₂, Al₂O₃, SiO₂ , alkylated ceramic particulates, or an oxide-based solid electrolyte, such as LLZO (lithium lanthanum zirconium oxide, Li₇La₃Zr₂O₁₂) or LATP(Li₁₊ₓAlₓTi₂₋ₓ(PO₄)₃). Further, the ceramic material may be mixed with the ceramic insulating materials and the oxide-based solid electrolyte. The separator 31, in case of being stacked by ceramic materials, may further include a polymer adhesive used to bind these ceramic particles. The polymer adhesive may be polyvinylidene fluoride (PVDF), polyvinylidene fluoride co-hexafluoropropylene (PVDF-HFP), polytetrafluoroethene (PTFE), acrylic acid glue, epoxy resin, polyethylene oxide (PEO), polyacrylonitrile (PAN), and polyimide (PI).

In this case, the above-mentioned predetermined spacing of the first active material layer 34 and the second active material layer 35 can be adjusted based on the requirement in practice. The widths of the first active material layer 34 and the second active material layer 35 may also be modified. Further, the distribution and arrangement of the predetermined spacing, the first active material layers 34 and the second active material layers 35 may be varied. These in the figures are used for illustrative purpose only, but not limited to these sizes.

The glue frame 36 is disposed to surround the electrochemical systems 301. The upper surface of the glue frame 36 is adhered to the first belt current collector 32, and the lower surface of the glue frame 36 is adhered to the second belt current collector 33. Therefore, all the electrochemical systems 301 are completely sealed by the glue frame 36, the first belt current collector 32 and the second belt current collector 33. The electrolyte system is impregnated or mixed in first active material layers 34 and the second active material layers 35. The electrolyte system is a gel electrolyte, a liquid electrolyte, a solid electrolyte or a combinations thereof. Therefore, by the active materials of first active material layers 34 and the second active material layers 35, the processes that the chemical energy is converted into electrical energy, i.e. discharging, and the electrical energy is converted into chemical energy, i.e. charging, are carried out. The ion migration and transport are achieved. The electric charges are transmitted via the first belt current collector 32 and the second belt current collector 33. Therefore, all the electrochemical systems 301 are completely sealed. The electrolyte system only circulates within respective electrochemical systems 301 and do not share between any two electrochemical systems 301. Only the charge transfer occurs between adjacent two of the electrochemical systems 301. There do not have any electrochemical reactions occurred between any two electrochemical systems 301. An example embodiment of the manufacturing method for the glue frame 36 is described below. The glue frames 36 are coated on the first belt current collector 32 and the second belt current collector 33 respectively. Then, the first belt current collector 32 and the second belt current collector 33 are adhered to each other by the hot pressing process. Also, the glue frames 36 may be coated only on either the first belt current collector 32 or the second belt current collector 33.

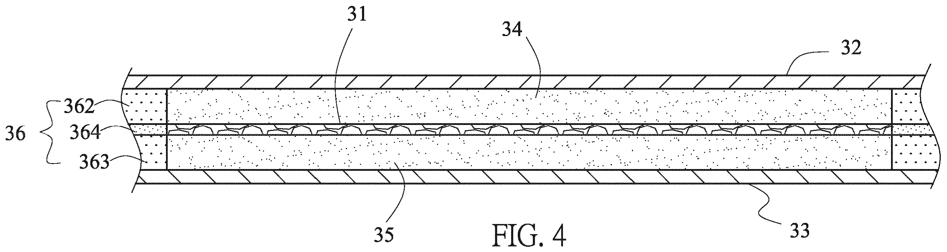

The materials of the glue frame 36 include the epoxy, polyethylene (PE), polypropylene (PP), polyurethane (PU), thermoplastic polyimide (TPI), silicone, acrylic resin and/or ultraviolet light curing adhesive. To enhance adhesion of the glue frames 36, in case of the silicone is utilized, the glue frames 36 may include two modified silicone layers 362, 363 and a silicone layer 364 disposed between the two modified silicone layers 362, 363, please see FIG. 4. The modified silicone layer 362 is adhered to the first belt current collector 32, and the modified silicone layer 363 is adhered to the second belt current collector 33. The silicone layer 364 is sandwiched between the two modified silicone layers 362, 363. The modified silicone layers 362, 363 are modified by adjusting a proportion of condensation-type silicone and addition-type silicone comparing to the silicone layer 364, or adding an additive to enhance adhesion for different material, i.e. the material of the first belt current collector 32 or the second belt current collector 33. Therefore, the adhesion between the interfaces of the first belt current collector 32 or the second belt current collector 33 and the glue frame 36 is enhanced. The overall appearance is more complete and the production yield is improved.

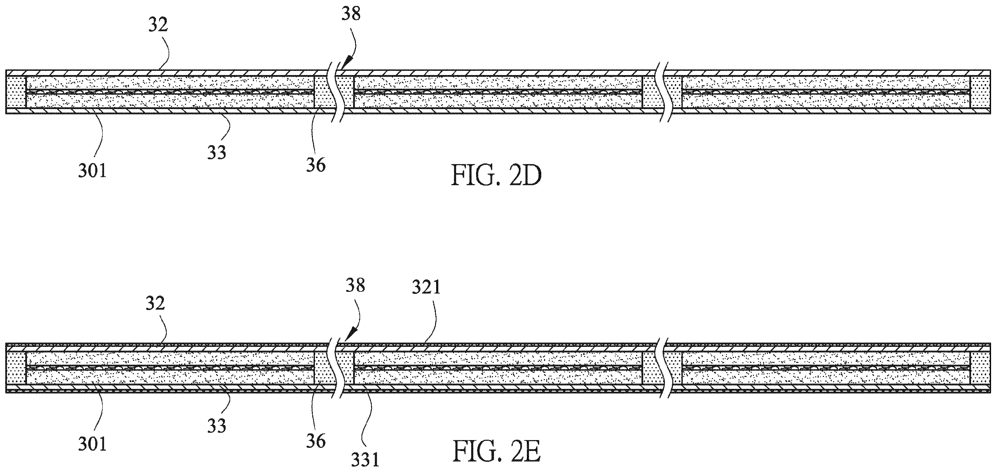

Please refer to FIG. 2D, the glue frame 36, which are located between any two adjacent electrochemical systems 301, together with the first belt current collector 32 and the second belt current collector 33 adhered by these portions of the glue frame 36 are folded to form the bending portions 38. Therefore, the electrochemical systems 301 will be vertically stacked relative to the same orientation. Detailed description will be presented in follows. The electrochemical systems 301 of the electrode assembly are folded to be vertically stacked in a zigzag shape, please see FIGS. 2A-2B. Moreover, at least one of the first belt current collector 32 and the second belt current collector 33 includes a structural reinforcing layer 321, 331 on an outer surface to improve a mechanical strength thereon, as shown in FIG. 2E. The structural reinforcing layer is made of a material including polyethylene terephthalate (PET), polyvinyl chloride (PVC), polyethylene (PE), polypropylene (PP), polystyrene (PS), polyimide, nylon, polyurethane, acrylic epoxy, silicone or a combinations thereof. The structural reinforcing layer 321, 331 would not cover the positions of the first belt current collector 32 and the second belt current collector 33, which are used to output the electricity.

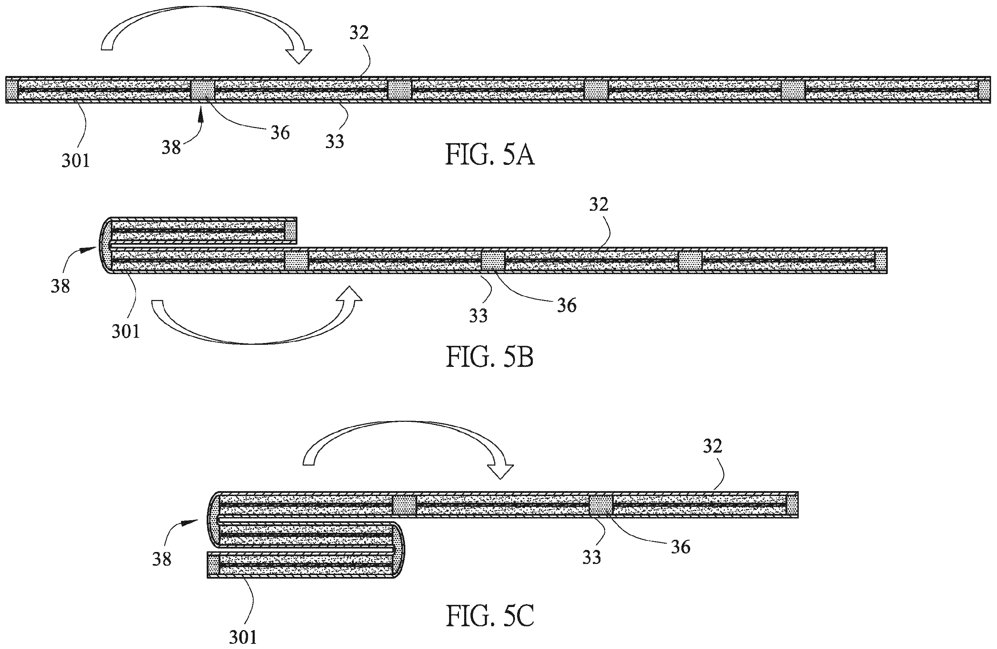

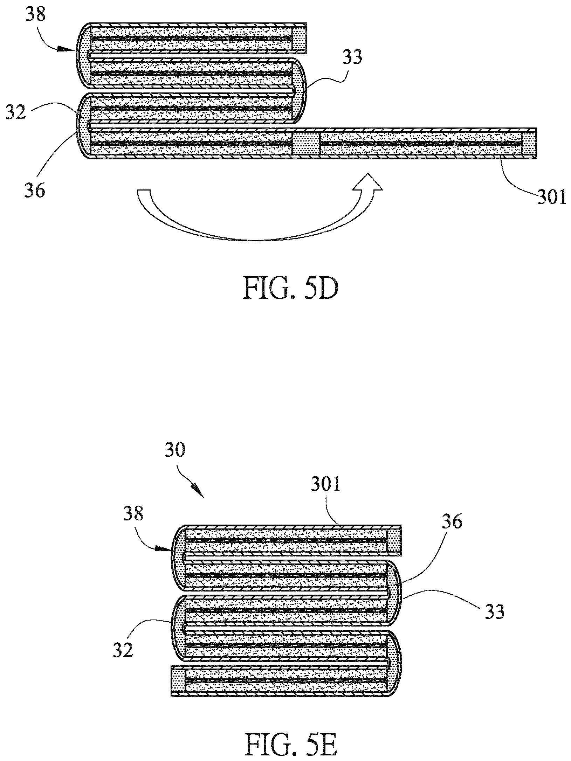

For the bending process, please refer to FIG. 5A, the electrochemical system 301 nearest the edge is folded by the bending portion 38, which is formed by the glue frame 36 near to this electrochemical system 301, together with the first belt current collector 32 and the second belt current collector 33 adhered by the portions of the glue frame 36. This electrochemical system 301 nearest the edge is stacked to the next electrochemical system 301, please refer to FIG. 5B. Then, the two stacked electrochemical systems 301 are folded in opposite directions by the next bending portion 38. Also, this bending portion 38 is formed by the next glue frame 36, together with the first belt current collector 32 and the second belt current collector 33 adhered by the portions of the glue frame 36. Therefore, due to the glue frame 36 can act as a buffering mechanism during bending, the electrodes, i.e. the first active material layers 34 and the second active material layers 35, would not be affected, such as being broken resulting from the bending or stacking force. Then the stacked electrochemical systems 301 are folded repeatedly in a back to front orientation to form the electrode assembly 30, please see FIGS 5C-5E. The electrode assembly with vertical stacking of the electrochemical systems 301 in a zigzag shape is achieved. The first belt current collector 32 and the second belt current collector 33 are shared for all the electrochemical systems 301. Therefore, the electrochemical systems 301 in the electrode assembly 30 are connected in parallel.

Moreover, the first active material layers 34 and the second active material layers 35 would not be affected during bending, thus the damage to the first active material layers 34 and the second active material layers 35 is avoided. The first belt current collector 32 and the second belt current collector 33 are usually made of metal materials, which have good malleability. Also, the glue frame 36 may be made of a material with better flexibility, such as silicone. The bending process is easier to preform to achieve the electrode assembly 30 with vertical stacking of the electrochemical systems 301 in a zigzag shape.

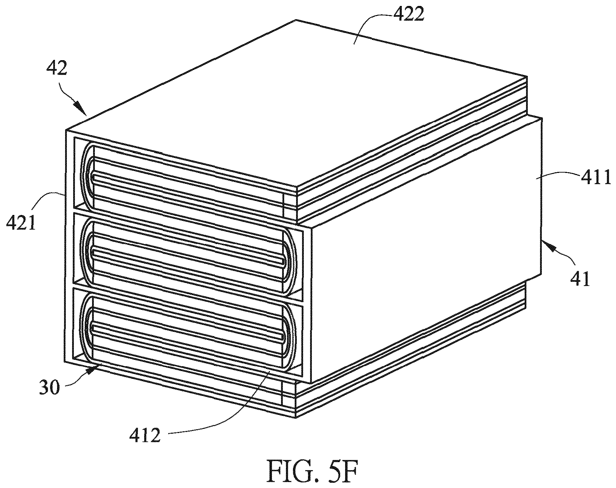

Moreover, as showing in FIG. 5F, the heat dissipating current collectors 41, 42 are adapted to improve heat dissipation. The heat dissipating current collectors 41, 42 respectively include the plate body 411, 421 and a plurality of extension plates 412, 422, extended from an edge of the plate body 411, 421. The extension plates 412, 422 are disposed between the stacked electrochemical systems 301 and contacts with the first belt current collector 32 and the second belt current collector 33. The large-area contact structure can effectively dissipate the heat generated by the electrochemical systems 301 to maintain the best performance of the electrochemical systems 301. Also, the heat dissipating current collectors 41, 42 may serve as additional electrically connection outputs.

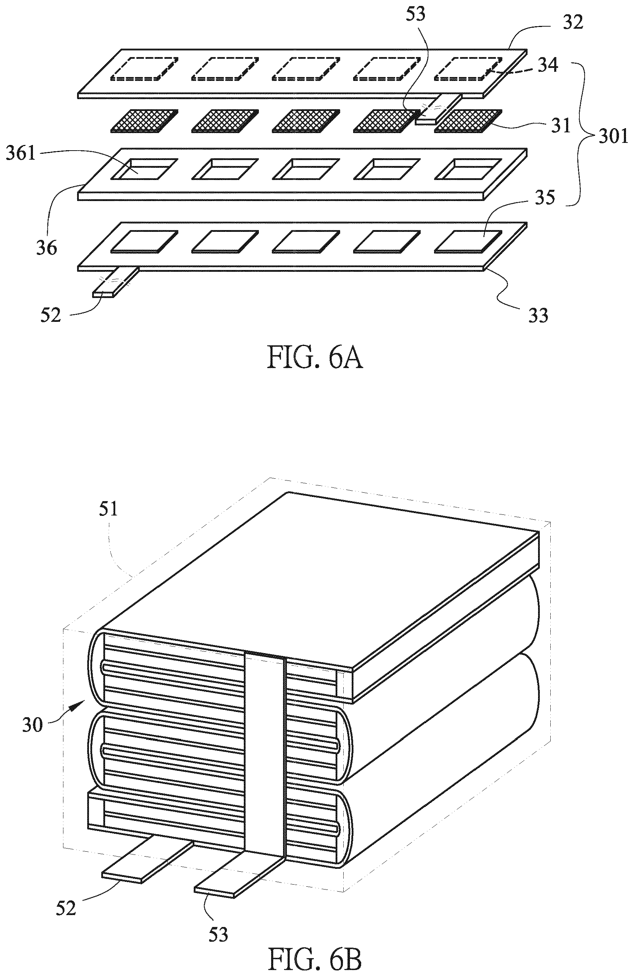

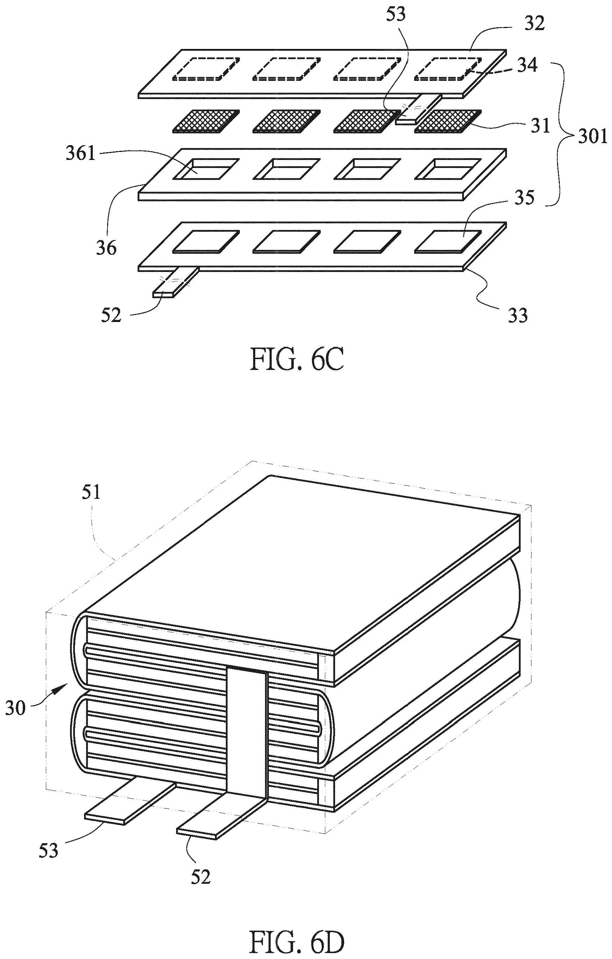

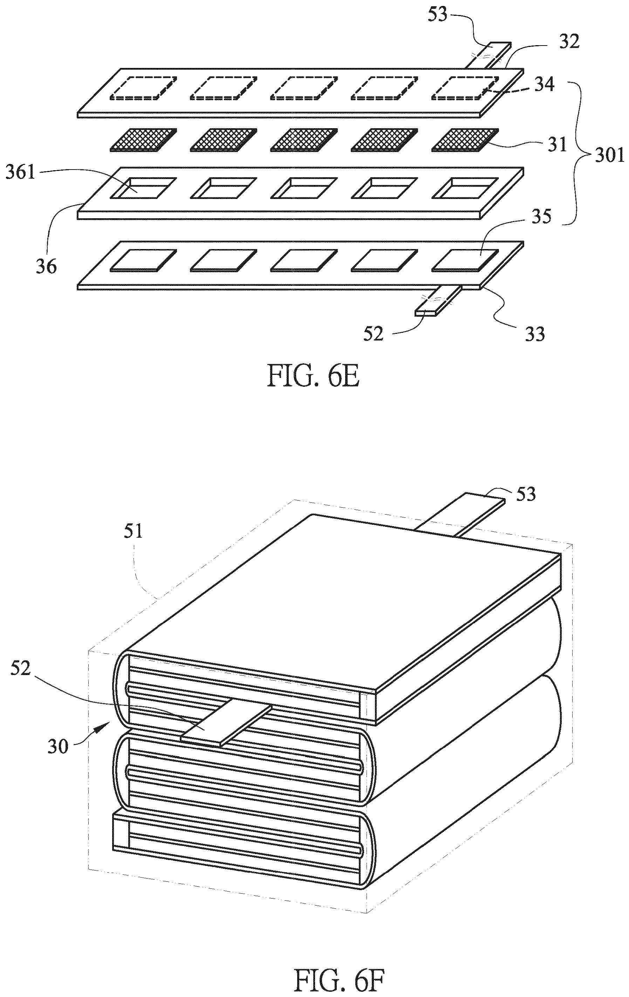

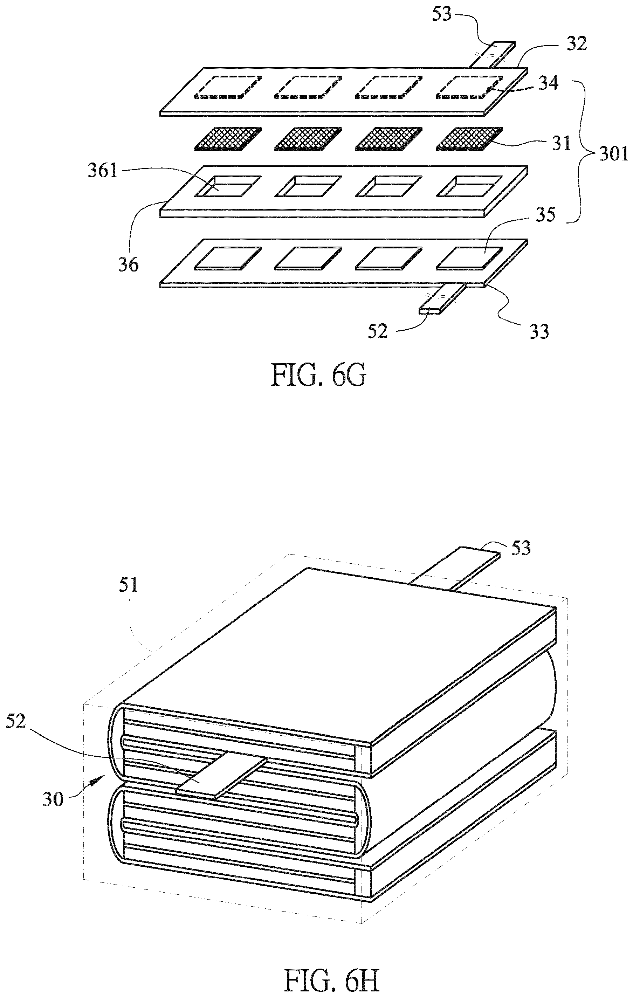

In practice, the electrode assembly 30 is packaged by a housing to form a battery device, as disclosed in the FIGS. 6A and 6B. As shown in the figures, the housing is an aluminum plastic film 51. The first belt current collector 32 and the second belt current collector 33 include the leads 52, 53 respectively to transmit the electricity outside. In this embodiment, as shown in the figures, the electrode assembly 30 is composed of an odd number of electrochemical systems 301. The leads 52, 53 are extended from the lateral sides of the electrode assembly 30. The lateral sides of the electrode assembly 30 are the two longitudinal sides of the electrode assembly 30, or the sides which are perpendicular to the bending direction. Also, the leads 52, 53 are located at the same side. Also, please see FIGS. 6C and 6D, the electrode assembly 30 is composed of an even number of electrochemical systems 301, and the leads 52, 53 are located at the different sides. Moreover, please refer to FIGS. 6E and 6F, in case of the electrode assembly 30 is composed of an odd number of electrochemical systems 301, the leads 52, 53 may be located at the different sides. Please refer to FIGS. 6G and 6H, in case of the electrode assembly 30 is composed of an even number of electrochemical systems 301, the leads 52, 53 may be located at the same side.

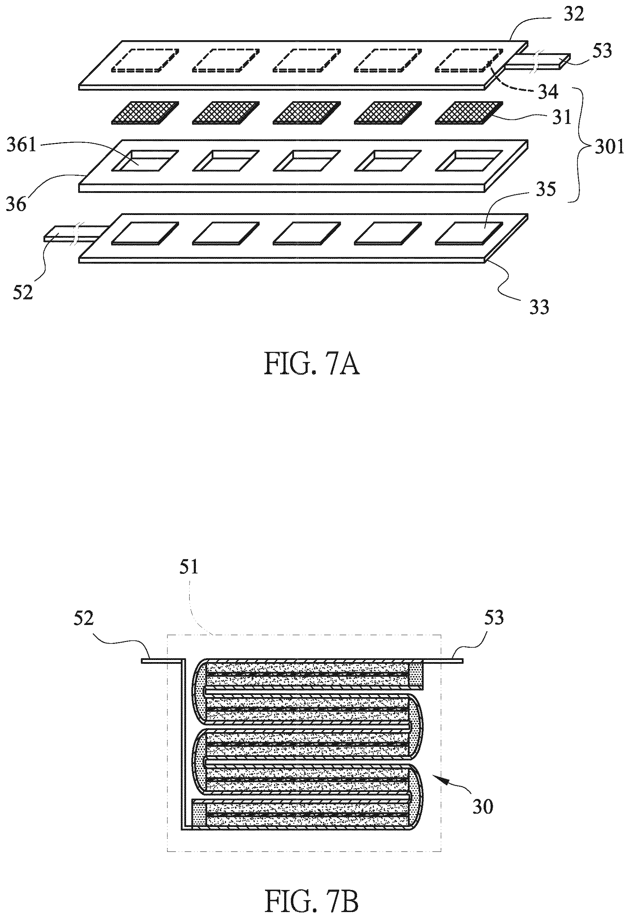

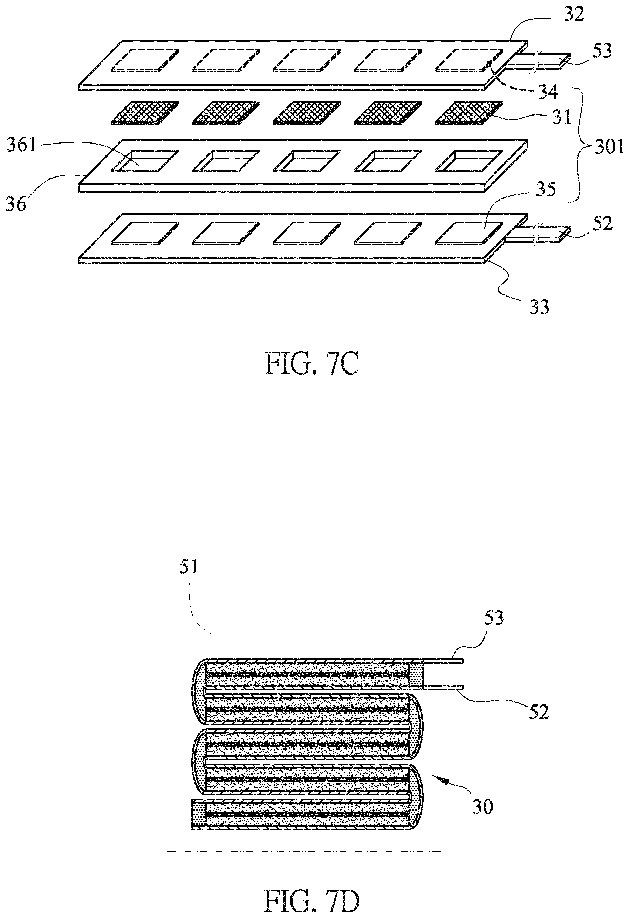

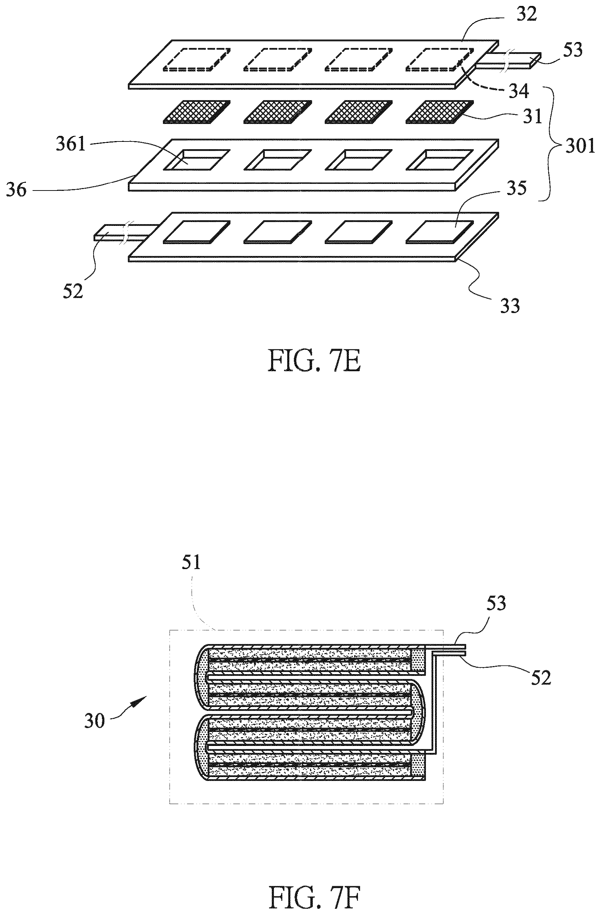

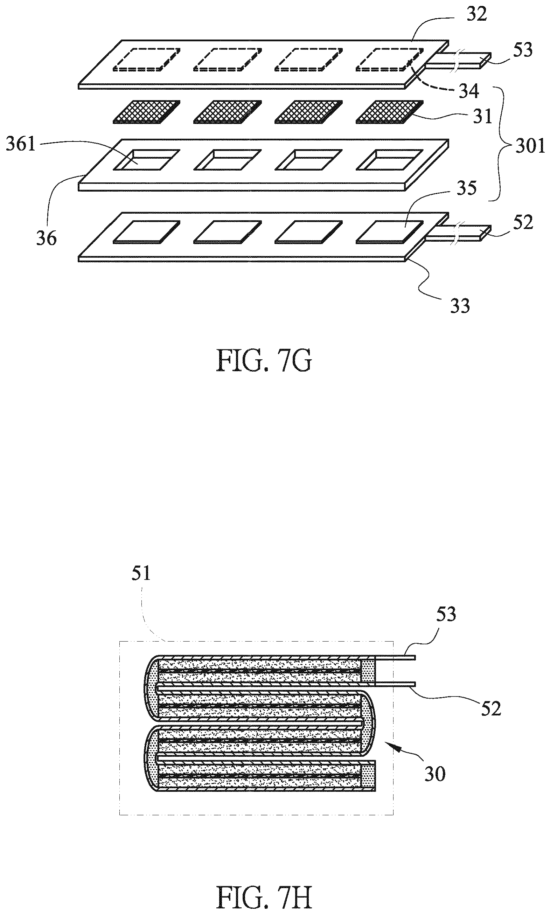

Further, excepting for the leads 52, 53 being extended from the lateral sides perpendicular to the bending direction, the leads 52, 53 may be extended from the ends of electrode assembly 30, i.e. parallel to the bending direction of the electrochemical systems 301. Please refer to FIGS. 7A and 7B, the electrode assembly 30 is composed of an odd number of electrochemical systems 301. The leads 52, 53 are extended from the two different ends of the electrode assembly 30. Also, the leads 52, 53 may be extended from the same end of the electrode assembly 30, as shown in FIGS. 7C and 7D. In case of the electrode assembly 30 is composed of an even number of electrochemical systems 301, please refer to FIG. 7E and 7F, the leads 52, 53 may be extended from the two different ends of the electrode assembly 30. Please see FIGS. 7G and 7H, the leads 52, 53 may be extended from the same end of the electrode assembly 30. As above-mentioned, the electrode assembly 30 with vertical stacking of the electrochemical systems 301 in a zigzag shape may be composed of an odd or even number of electrochemical systems 301. The production efficiency and the arrangement for power requirements are improved, and the difficulty in manufacturing processes is reduced.

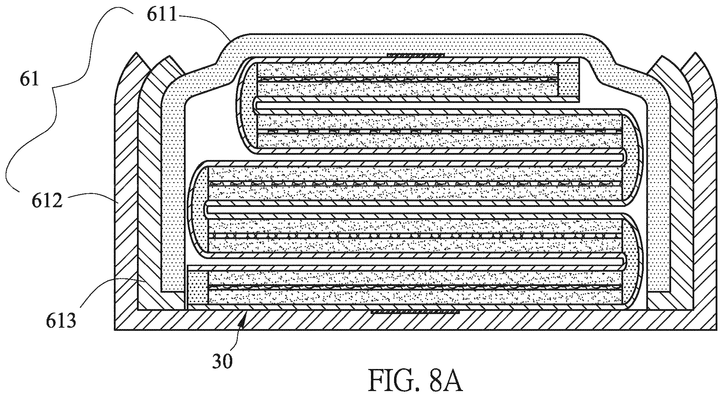

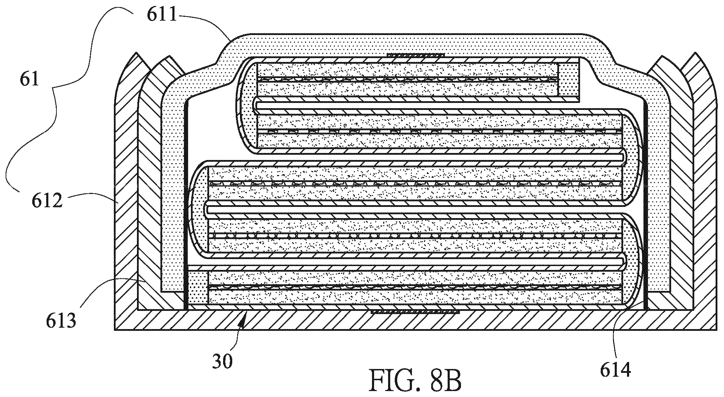

Moreover, please refer to FIG. 8A, the housing is a case 61 for quasi-coin batteries. The first belt current collector 32 and the second belt current collector 33 of the electrode assembly 30 are contacted with upper and lower inner outputs to form electrical connections. It should be noted that, as shown in the figure, the lengths of the electrochemical systems 301 are varied, but are not limited to, based on the profile of the case 61 to make the energy density be maximized. It may be an easier way to mass-produce that the lengths of the electrochemical systems 301 are uniform, as shown in FIG. 4E, or any other arrangements. A fire retardant or a coolant is filled between the electrode assembly and the housing, either the aluminum plastic film 51 or the case 61 to improve the performance of the battery device and enhance the safety of the battery device. the case 61 includes an upper case 611 and a lower case 612. An electrically insulating material 613 is disposed between the upper case 611 and the lower case 612 to make the upper case 611 and the lower case 612 be electrically insulated from one another. Please refer to FIG. 8B, in case of there do not have structural reinforcing layers or electrically insulating structure on the first belt current collector 32 and the second belt current collector 33, an electrically insulating layer 614 is coated on parts of the inner surfaces, which are not the upper and lower inner outputs, of the upper case 611 and the lower case 612 to prevent the improper electrical transmission between the upper case 611, the lower case 612 and the first belt current collector 32 and the second belt current collector 33.

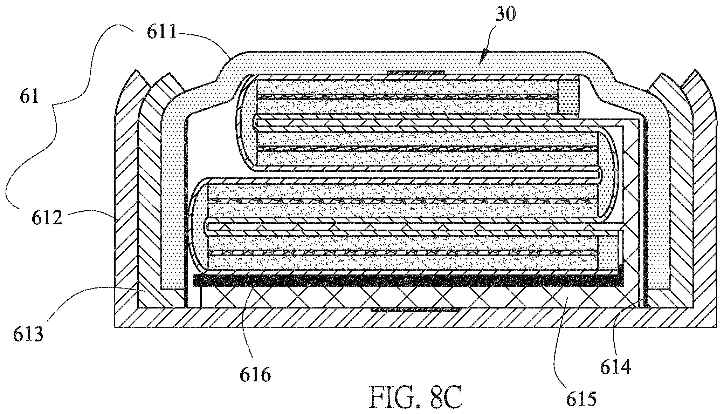

As shown in FIG. 8B, the electrode assembly 30 is composed of an odd number of electrochemical systems 301. Please refer to FIG. 8C, the electrode assembly 30 is composed of an even number of electrochemical systems 301. Due to the uppermost surface and the lowermost surface of the electrode assembly 30 are the same polarity, a conductive bus 615 is adapted to electrically connect the lower case 612 with the belt current collector with another polarity. An electrically insulating body 616 is utilized to prevent short-circuit occur between the lowermost surface of the electrode assembly 30 and the conductive bus 615. The conductive bus 615 may be designed as above-mentioned heat dissipating current collectors. The other arrangement and structure are similar, so that the repeated description is omitted.

Accordingly, the invention provides an electrode assembly and its battery device thereof. The electrode assembly is formed by the electrochemical systems and the glue frame to be directly sandwiched between two belt current collectors. All the electrochemical systems are completely sealed by the glue frame and the two belt current collectors. All components of the electrochemical systems do not share between any two electrochemical systems. Therefore, the electrolyte system only circulates within respective electrochemical systems and do not share between any two electrochemical systems. Only the charge transfer occurs between adjacent two of the electrochemical systems. Moreover, the glue frame, which are located between any two adjacent electrochemical systems, together with the first belt current collector and the second belt current collector adhered by these portions of the glue frame are folded to form the bending portions. The electrochemical systems are folded to the adjacent electrochemical systems to form a vertical stacking in a zigzag shape. Therefore, it is easy to mass produce and the amount of the tabs configured to be connected in series or parallel is reduced. The energy density loss caused by space configuration are reduced. Also, due to the belt current collectors are belt-shaped, it is easy to mass produce the active material layers and the glue fame by patterned coating.

## Claims

1. An electrode assembly (30), comprising:
a first belt current collector (32) and a second belt current collector (33) opposed to the first belt current collector (32);
a plurality of electrochemical systems (301), disposed between the first belt current collector (32) and the second belt current collector (33);
a glue frame (36), adhering and being sandwiched between the first belt current collector (32) and the second belt current collector (33) and surrounding the electrochemical systems (301), wherein the electrochemical systems (301) are completely sealed by the glue frame (36), the first belt current collector (32) and the second belt current collector (33) to make charge transfer occurring between adjacent two of the electrochemical systems (301) without electrochemical reaction; and
a plurality of bending portions (38), formed by bending portions of the glue frame (36), which are located between the electrochemical systems (301), together with the first belt current collector (32) and the second belt current collector (33) adhered by these portions of the glue frame (36) to make the electrochemical systems (301) be stacked in a back to front orientation.

2. The electrode assembly (30) of claim 1, wherein the electrochemical systems (301) are vertically stacked in a zigzag shape along with a signal axis to form a parallel connection.

3. The electrode assembly (30) of claim 1, further comprising a heat dissipating current collector (41, 42), including a plate body (411, 421) and a plurality of extension plates (412, 422) extended from an edge of the plate body (411, 421), wherein the extension plates (412, 422) are disposed between the stacked electrochemical systems (301) and contact with the first belt current collector (32) or the second belt current collector (33).

4. The electrode assembly (30) of claim 1, wherein each of the electrochemical systems (301) comprising:
a first active material layer (34), being in contact with the first belt current collector (32);
a second active material layer (35), being in contact with the second belt current collector (33); and
a separator (31), disposed between the first active material layer (34) and the second active material layer (35).

5. The electrode assembly (30) of claim 4, further comprising an electrolyte system impregnated in the first active material layer (34) and the second active material layer (35), wherein the electrolyte system is a gel electrolyte, a liquid electrolyte, a solid electrolyte or a combinations thereof.

6. The electrode assembly (30) of claim 5, wherein the glue frame (36) seals all of the electrochemical systems (301), and the electrolyte system only circulates within each of the electrochemical systems (301).

7. The electrode assembly (30) of claim 1, wherein the glue frame (36) comprising a silicone layer (364) and two modified silicone layers (362, 363) disposed on two sides of the silicone layer (364), wherein one of the two modified silicone layers (362, 363) is adhered to the first belt current collector (32) and the other of the two modified silicone layers (362, 363) is adhered to the second belt current collector (33).

8. The electrode assembly (30) of claim 1, wherein at least one of the first belt current collector (32) and the second belt current collector (33) includes a structural reinforcing layer (321, 331) on an outer surface to improve a mechanical strength thereon.

9. The electrode assembly (30) of claim 8, wherein the structural reinforcing layer (321, 331) is made of a material including polyethylene terephthalate (PET), polyvinyl chloride (PVC), polyethylene (PE), polypropylene (PP), polystyrene (PS), polyimide, nylon, polyurethane, acrylic epoxy, silicone or a combinations thereof.

10. The electrode assembly (30) of claim 1, wherein each of the first belt current collector (32) and the second belt current collector (33) includes a lead (52, 53), and wherein the two leads (52, 53) are located at different sides.

11. The electrode assembly (30) of claim 1, wherein each of the first belt current collector (32)and the second belt current collector (33) includes a lead (52, 53), and wherein the two leads (52, 53) are located at the same side.

12. The electrode assembly (30) of claim 1, wherein a number of the electrochemical systems (301) is odd.

13. The electrode assembly (30) of claim 1, wherein a number of the electrochemical systems (301) is even.

14. A battery device composed of the electrode assembly (30) of claim 1 and a housing (51; 61) packaging the electrode assembly (30).

15. The battery device of claim 14, wherein a fire retardant or a coolant is filled between the electrode assembly (30) and the housing (51; 61).

16. The battery device of claim 14, wherein the housing (51; 61) is an aluminum plastic film (51) or includes an upper case (611) and a lower case (612).

## Patentansprüche

1. - Elektrodenanordnung (30), umfassend:
einen ersten Bandstromkollektor (32) und einen zweiten Bandstromkollektor (33), der dem ersten Bandstromkollektor (32) gegenüberliegt;
eine Vielzahl von elektrochemischen Systemen (301), die zwischen dem ersten Bandstromkollektor (32) und dem zweiten Bandstromkollektor (33) angeordnet sind;
einen Kleberahmen (36), der anhaftet und zwischen dem ersten Bandstromkollektor (32) und dem zweiten Bandstromkollektor (33) eingefügt ist und die elektrochemischen Systeme (301) umgibt, wobei die elektrochemischen Systeme (301) vollständig durch den Kleberahmen (36), den ersten Bandstromkollektor (32) und den zweiten Bandstromkollektor (33) abgedichtet sind, sodass eine Ladungsübertragung zwischen zwei benachbarten der elektrochemischen Systeme (301) ohne elektrochemische Reaktion erfolgt; und
eine Vielzahl von Biegeabschnitten (38), gebildet durch Biegeabschnitte des Kleberahmens (36), die zwischen den elektrochemischen Systemen (301) angeordnet sind, zusammen mit dem ersten Bandstromkollektor (32) und dem zweiten Bandstromkollektor (33), die durch diese Abschnitte des Kleberahmens (36) miteinander verklebt sind, sodass die elektrochemischen Systeme (301) in einer Rücken-an-Front-Orientierung gestapelt sind.

2. - Elektrodenanordnung (30) nach Anspruch 1, wobei die elektrochemischen Systeme (301) vertikal in einer Zickzackform entlang einer Signalachse gestapelt sind, um eine Parallelschaltung zu bilden.

3. - Elektrodenanordnung (30) nach Anspruch 1, ferner umfassend einen wärmeableitenden Stromkollektor (41, 42), aufweisend einen Plattenkörper (411, 421) und eine Vielzahl von Erweiterungsplatten (412, 422), die sich von einer Kante des Plattenkörpers (411, 421) erstrecken, wobei die Erweiterungsplatten (412, 422) zwischen den gestapelten elektrochemischen Systemen (301) angeordnet sind und mit dem ersten Bandstromkollektor (32) oder dem zweiten Bandstromkollektor (33) in Kontakt stehen.

4. - Elektrodenanordnung (30) nach Anspruch 1, wobei jedes der elektrochemischen Systeme (301) umfasst:
eine erste Aktivmaterialschicht (34), die mit dem ersten Bandstromkollektor (32) in Kontakt steht;
eine zweite Aktivmaterialschicht (35), die mit dem zweiten Bandstromkollektor (33) in Kontakt steht; und
einen Separator (31), der zwischen der ersten Aktivmaterialschicht (34) und der zweiten Aktivmaterialschicht (35) angeordnet ist.

5. - Elektrodenanordnung (30) nach Anspruch 4, ferner umfassend ein Elektrolytsystem, das in die erste Aktivmaterialschicht (34) und die zweite Aktivmaterialschicht (35) imprägniert ist, wobei das Elektrolytsystem ein Gelelektrolyt, ein flüssiger Elektrolyt, ein fester Elektrolyt oder Kombinationen davon ist.

6. - Elektrodenanordnung (30) nach Anspruch 5, wobei der Kleberahmen (36) alle elektrochemischen Systeme (301) abdichtet und das Elektrolytsystem nur innerhalb jedes der elektrochemischen Systeme (301) zirkuliert.

7. - Elektrodenanordnung (30) nach Anspruch 1, wobei der Kleberahmen (36) eine Silikonschicht (364) und zwei modifizierte Silikonschichten (362, 363), die auf zwei Seiten der Silikonschicht (364) angeordnet sind, umfasst, wobei eine der beiden modifizierten Silikonschichten (362, 363) mit dem ersten Bandstromkollektor (32) verklebt ist und die andere der beiden modifizierten Silikonschichten (362, 363) mit dem zweiten Bandstromkollektor (33) verklebt ist.

8. - Elektrodenanordnung (30) nach Anspruch 1, wobei mindestens einer des ersten Bandstromkollektors (32) und des zweiten Bandstromkollektors (33) eine strukturelle Verstärkungsschicht (321, 331) auf einer Außenfläche aufweist, um dort eine mechanische Festigkeit zu verbessern.

9. - Elektrodenanordnung (30) nach Anspruch 8, wobei die strukturelle Verstärkungsschicht (321, 331) aus einem Material hergestellt ist, das Polyethylenterephthalat (PET), Polyvinylchlorid (PVC), Polyethylen (PE), Polypropylen (PP), Polystyrol (PS), Polyimid, Nylon, Polyurethan, Acrylepoxid, Silikon oder Kombinationen davon aufweist.

10. - Elektrodenanordnung (30) nach Anspruch 1, wobei jeder des ersten Bandstromkollektors (32) und des zweiten Bandstromkollektors (33) einen Anschluss (52, 53) aufweist und wobei die beiden Anschlüsse (52, 53) an unterschiedlichen Seiten angeordnet sind.

11. - Elektrodenanordnung (30) nach Anspruch 1, wobei jeder des ersten Bandstromkollektors (32) und des zweiten Bandstromkollektors (33) einen Anschluss (52, 53) aufweist und wobei die beiden Anschlüsse (52, 53) an derselben Seite angeordnet sind.

12. - Elektrodenanordnung (30) nach Anspruch 1, wobei eine Anzahl der elektrochemischen Systeme (301) ungerade ist.

13. - Elektrodenanordnung (30) nach Anspruch 1, wobei eine Anzahl der elektrochemischen Systeme (301) gerade ist.

14. - Batterievorrichtung, zusammengesetzt aus der Elektrodenanordnung (30) nach Anspruch 1 und einem Gehäuse (51; 61), das die Elektrodenanordnung (30) verpackt.

15. - Batterievorrichtung nach Anspruch 14, wobei ein Flammschutzmittel oder ein Kühlmittel zwischen der Elektrodenanordnung (30) und dem Gehäuse (51; 61) eingefüllt ist.

16. - Batterievorrichtung nach Anspruch 14, wobei das Gehäuse (51; 61) eine Aluminium-Kunststoff-Folie (51) ist oder ein oberes Gehäuse (611) und ein unteres Gehäuse (612) aufweist.

## Revendications

1. - Ensemble électrode (30) comprenant :
un premier collecteur de courant en bande (32) et un second collecteur de courant en bande (33) opposé au premier collecteur de courant en bande (32) ;
une pluralité de systèmes électrochimiques (301), disposée entre le premier collecteur de courant en bande (32) et le second collecteur de courant en bande (33) ;
un cadre de colle (36), collé et étant pris en sandwich entre le premier collecteur de courant en bande (32) et le second collecteur de courant en bande (33) et entourant les systèmes électrochimiques (301), les systèmes électrochimiques (301) étant complètement scellés par le cadre de colle (36), le premier collecteur de courant en bande (32) et le second collecteur de courant en bande (33) pour amener un transfert de charge à se produire entre deux systèmes électrochimiques adjacents des systèmes électrochimiques (301) sans réaction électrochimique ; et
une pluralité de parties de flexion (38), formée par des parties de flexion du cadre de colle (36), qui sont situées entre les systèmes électrochimiques (301), conjointement avec le premier collecteur de courant en bande (32) et le second collecteur de courant en bande (33) collés par ces parties du cadre de colle (36) pour amener les systèmes électrochimiques (301) à être empilés dans une orientation d'arrière en avant.

2. - Ensemble électrode (30) selon la revendication 1, dans lequel les systèmes électrochimiques (301) sont empilés verticalement en forme de zigzag le long d'un axe de signal pour former une liaison parallèle.

3. - Ensemble électrode (30) selon la revendication 1, comprenant en outre un collecteur de courant à dissipation de chaleur (41, 42), comprenant un corps de plaque (411, 421) et une pluralité de plaques d'extension (412, 422) s'étendant à partir d'un bord du corps de plaque (411, 421), les plaques d'extension (412, 422) étant disposées entre les systèmes électrochimiques empilés (301) et étant en contact avec le premier collecteur de courant en bande (32) ou le second collecteur de courant en bande (33).

4. - Ensemble électrode (30) selon la revendication 1, dans lequel chacun des systèmes électrochimiques (301) comprend :
une première couche de matériau actif (34), étant en contact avec le premier collecteur de courant en bande (32) ;
une seconde couche de matériau actif (35), étant en contact avec le second collecteur de courant en bande (33) ; et
un séparateur (31), disposé entre la première couche de matériau actif (34) et la seconde couche de matériau actif (35).

5. - Ensemble électrode (30) selon la revendication 4, comprenant en outre un système d'électrolyte imprégné dans la première couche de matériau actif (34) et la seconde couche de matériau actif (35), le système d'électrolyte étant un électrolyte en gel, un électrolyte liquide, un électrolyte solide ou une combinaison de ceux-ci.

6. - Ensemble électrode (30) selon la revendication 5, dans lequel le cadre de colle (36) scelle tous les systèmes électrochimiques (301), et le système d'électrolyte circule uniquement à l'intérieur de chacun des systèmes électrochimiques (301).

7. - Ensemble électrode (30) selon la revendication 1, dans lequel le cadre de colle (36) comprend une couche de silicone (364) et deux couches de silicone modifié (362, 363) disposées sur deux côtés de la couche de silicone (364), l'une des deux couches de silicone modifié (362, 363) étant collée au premier collecteur de courant en bande (32) et l'autre des deux couches de silicone modifié (362, 363) étant collée au second collecteur de courant en bande (33).

8. - Ensemble électrode (30) selon la revendication 1, dans lequel au moins l'un du premier collecteur de courant en bande (32) et du second collecteur de courant en bande (33) comprend une couche de renforcement structural (321, 331) sur une surface extérieure pour en améliorer la résistance mécanique.

9. - Ensemble électrode (30) selon la revendication 8, dans lequel la couche de renforcement structural (321, 331) est constituée d'un matériau comprenant le poly(téréphtalate d'éthylène) (PET), le poly(chlorure de vinyle) (PVC), le polyéthylène (PE), le polypropylène (PP), le polystyrène (PS), le polyimide, le nylon, le polyuréthane, l'époxy acrylique, le silicone ou une combinaison de ceux-ci.

10. - Ensemble électrode (30) selon la revendication 1, dans lequel le premier collecteur de courant en bande (32) et le second collecteur de courant en bande (33) comprennent chacun un fil de raccord (52, 53), et dans lequel les deux fils de raccord (52, 53) sont situés sur des côtés différents.

11. - Ensemble électrode (30) selon la revendication 1, dans lequel chacun du premier collecteur de courant en bande (32) et du second collecteur de courant en bande (33) comprend un fil de raccord (52, 53), et dans lequel les deux fils de raccord (52, 53) sont situés du même côté.

12. - Ensemble électrode (30) selon la revendication 1, dans lequel le nombre de systèmes électrochimiques (301) est impair.

13. - Ensemble électrode (30) selon la revendication 1, dans lequel le nombre de systèmes électrochimiques (301) est pair.

14. - Dispositif de batterie composé de l'ensemble électrode (30) selon la revendication 1 et d'un boîtier (51 ; 61) emballant l'ensemble électrode (30).

15. - Dispositif de batterie selon la revendication 14, dans lequel un produit ignifugeant ou un réfrigérant est introduit entre l'ensemble électrode (30) et le boîtier (51 ; 61).

16. - Dispositif de batterie selon la revendication 14, dans lequel le boîtier (51 ; 61) est un film de matière plastique et d'aluminium (51) ou comprend un étui supérieur (611) et un étui inférieur (612).
